# EUROPÄISCHE PATENTANMELDUNG

(11) **EP 2 687 792 A2**
(43) Veröffentlichungstag der Anmeldung: **22.01.2014**
(21) Anmeldenummer: 13175964.9
(22) Anmeldetag: 10.07.2013
(51) Int. Cl.: F24J 3/08

(54) **Erdwärmetauscher**

(30) Priorität: 18.07.2012 DE 102012106520; 18.07.2012 DE 102012106519
(71) Anmelder: Lieberwirth, Volker, 01689 Weinböhla (DE)
(72) Erfinder: Lieberwirth, Volker, 01689 Weinböhla (DE)
(74) Vertreter: Carlsohn, Alexander

(57) **Zusammenfassung**

Die Erfindung betrifft einen Erdwärmetauscher zum im Wesentlichen horizontalen Einbau in das Erdreich, umfassend ein oder mehrere Kollektorelemente (1) mit beliebiger Querschnittsgeometrie, die von einem flüssigen oder gasförmigen Arbeitsmedium durchströmt werden und dabei Wärme zwischen dem Arbeitsmedium und dem Erdreich übertragen. Dabei ist vorgesehen, dass die Kollektorelemente (1) einen der Erdoberfläche zugewandten oberen Bereich (2) und einen mit diesem körperlich verbundenen, dem Erdinneren zugewandten unteren Bereich (3) aufweisen, wobei der Gesamtwärmedurchlasskoeffizient des oberen Bereichs (2) geringer ist als der Gesamtwärmedurchlasskoeffizient des unteren Bereichs (3).

## Beschreibung

Die Erfindung betrifft einen Erdwärmetauscher und ein Verfahren zur Errichtung eines solchen Erdwärmetauschers.

Aufgrund der immer stärker werdenden Bedeutung erneuerbarer Energien hat auch das allgemeine Interesse an der Nutzung von Erdwärme zugenommen. Dabei wird das Temperaturgefälle zwischen Außenluft und Erdreich ausgenutzt. Die Erdwärme wird im Allgemeinen durch Bohrungen in das Erdinnere oder Ausschachtungen oberflächennaher Bereiche gewonnen. In diese Bohrungen oder Ausschachtungen werden Kollektoren oder Sonden eingebracht, die von einem Arbeitsmedium durchströmt werden, das die Wärme des Erdreichs aufnimmt.

Um einen möglichst effizienten Wärmeaustausch zu gewährleisten, muss der Erdwärmetauscher eine hohe Wärmeentzugsleistung besitzen. Diese Wärmeentzugsleistung wird von verschiedenen Faktoren, wie Materialien der Wärmetauscher, Strömungsgeschwindigkeit des Arbeitsmediums, Oberflächen bzw. Oberflächenbeschaffenheit der Wärmetauscher und Verwirbelung der Strömung des Arbeitsmediums, beeinflusst. Um die Wärmeentzugsleistung zu steigern, werden im Stand der Technik verschiedene Lösungen beschrieben.

Zur Lösung dieses Problems schlägt die DE 20 2006 019 801 U1 einen Wärmetauscher mit einer rohrartigen Leitung für eine Sole vor, bei dem zumindest einer der beiden Abschnitte der rohrartigen Leitung über zumindest einen Teil seiner Länge in spiralförmigen Windungen verläuft.

DE 20 2006 016 308 schlägt einen in einem Boden verlegbaren wellrohrförmigen Wärmetauscher zur Entnahme von Wärme aus dem Boden vor, bei dem ein druckfestes wellrohrförmiges Wärmetauscherrohr bereichsweise sowohl an seiner Mantelinnenfläche, als auch an seiner Mantelaußenfläche mit einer mit seinen Wellentälern und -rücken quer zur Wärmetauscherlängsachse ausgerichteten Wellung ausgestattet ist und das Wärmetauscherrohr entlang der Rohrlängsachse abwechselnd aus gewellten und zylindrischen Abschnitten besteht.

DE 10 2008 029 400 beschreibt einen Wärmetauscher, der horizontal oder vertikal in Geothermiebohrungen im Erdreich eingebaut oder als Heizungskollektor verwendet werden kann, bei dem die Wärmeleitfähigkeit der Sondenrohre durch die Ausbildung der Rohraußen- und/oder -innenfläche mit Längs-, Quer- oder Gewinderippen, Wellen bzw. Bogenrippen bei gleichem Durchmesser der Sondenrohre vergrößert wird und zur Erhöhung des Wirkungsgrades dem Werkstoff der Sondenrohre und dem Verpressmaterial wärmeleitende Mittel beigemengt werden. Der Wärmetauscher arbeitet mit einem Solestrom.

Es soll also in allen beschriebenen Lösungen eine Vergrößerung der Übertragungsfläche am Gesamtumfang der Sondenrohre erreicht werden. Damit ist jedoch keine wesentliche Erhöhung der Entzugsleistung erzielbar, da dies nicht der Annahme des Temperaturvektorenverlaufes in Richtung Erdoberfläche gerecht wird. Eine Vergrößerung der Sondenrohrquerschnitte zur Vergrößerung der Übertragungsfläche erzeugt zunehmend in der Rohrmitte eine an der Temperaturübertragung nahezu unbeteiligte und damit ungünstige laminare Strömung. Eine Überschreitung eines Querschnittswertes von 4 dm² bringt demzufolge keine Verbesserungen des Wirkungsgrades.

Alle im Stand der Technik vorgeschlagenen Lösungen haben also weiterhin den Nachteil, dass aufgrund des hohen Montageaufwandes und der noch immer bestehenden zu geringen Wärmeentzugsleistung kein effizienter und kostengünstiger Betrieb einer Wärmetauscheranlage möglich ist. Insbesondere bei nachträglichem Einbau in das umliegende Erdreich eines bestehenden Gebäudes ist der Montageaufwand so groß, dass die Energiegewinnung erst nach sehr langen Betriebszeiten die aufgewendeten Kosten deckt.

Aufgabe der Erfindung ist es, die Nachteile nach dem Stand der Technik zu beseitigen. Es soll insbesondere ein Erdwärmetauscher angegeben werden, bei dem die Wärmeentzugsleistung so gesteigert ist, dass ein effizienter Betrieb trotz hohen Montageaufwandes auch bei bereits bestehenden Gebäuden möglich ist.

Diese Aufgabe wird durch die Merkmale der Ansprüche 1, 14 und 15 gelöst. Zweckmäßige Ausgestaltungen der Erfindungen ergeben sich aus den Merkmalen der Unteransprüche.

Nach Maßgabe der Erfindung ist ein Erdwärmetauscher zum im Wesentlichen horizontalen Einbau in das Erdreich vorgesehen, der ein oder mehrere Kollektorelemente mit beliebiger Querschnittsgeometrie umfasst, die von einem flüssigen oder gasförmigen Arbeitsmedium durchströmt werden und dabei Wärme zwischen dem Arbeitsmedium und dem Erdreich übertragen. Die Kollektorelemente bestehen aus einem der Erdoberfläche zugewandten oberen Bereich und einem mit diesem körperlich verbundenen, dem Erdinneren zugewandten unteren Bereich, wobei der Gesamtwärmedurchlasskoeffizient des oberen Bereichs geringer ist als der Gesamtwärmedurchlasskoeffizient des unteren Bereichs. Dabei hat es sich als besonders vorteilhaft erwiesen, wenn der Gesamtwärmedurchlasskoeffizient des oberen Bereichs im Verhältnis zum Gesamtwärmedurchlasskoeffizient des unteren Bereichs sehr klein ist. Der Gesamtwärmedurchlasskoeffizient des oberen Bereichs sollte nicht größer als 0,1 bis 10 W · m⁻² · K⁻¹ sein. Bevorzugt beträgt er nur 0,5 bis 5 W · m⁻² · K⁻¹, stärker bevorzugt 0,5 bis 2 W · m⁻² · K⁻¹. Ein besonders effizienter Gesamtwärmedurchlasskoeffizient für den oberen Bereich ist 1 W · m⁻² · K⁻¹.

Gemäß der Erfindung ist unter dem oberen Bereich des Kollektorelementes der Bereich bis zu etwa 1/3 des Gesamtbereiches des Kollektorelementes im Querschnitt, vorzugsweise bis zu 1/2 des Gesamtbereiches des Kollektorelementes im Querschnitt zu verstehen, das heißt, der Bereich, der sich vom oberen Erdreich zu etwa 1/3, vorzugsweise bis zu 1/2 der Höhe des Kollektorelementes im Querschnitt erstreckt. Im Umkehrschluss ist damit der untere Bereich des Kollektorelementes der Bereich bis zu etwa 2/3 des Gesamtbereiches des Kollektorelementes im Querschnitt, vorzugsweise bis zu 1/2 des Gesamtbereiches des Kollektorelementes im Querschnitt, das heißt, der Bereich, der sich vom unteren Erdreich zu etwa 2/3, vorzugsweise bis zu 1/2 der Höhe des Kollektorelementes im Querschnitt erstreckt.

Für die von der vorliegenden Erfindung mögliche hohe Wärmeentzugsleistung sollte bei Verwendung eines flüssigen Arbeitsmediums der Gesamtwärmedurchlasskoeffizient des unteren Bereichs 100 bis 1500 W · m⁻² · K⁻¹, bevorzugt 150 bis 1200 W · m⁻² · K⁻¹ betragen. Ein besonders effizienter Gesamtwärmedurchlasskoeffizient für den unteren Bereich ist größer als 1000 W · m⁻² · K⁻¹.

Für die von der vorliegenden Erfindung mögliche hohe Wärmeentzugsleistung sollte bei Verwendung eines gasförmigen Arbeitsmediums der Gesamtwärmedurchlasskoeffizient des unteren Bereichs 100 bis 200 W · m⁻² · K⁻¹, bevorzugt 120 bis 180 W · m⁻² · K⁻¹, stärker bevorzugt 140 bis 160 W · m⁻² · K⁻¹ betragen. Ein besonders effizienter Gesamtwärmedurchlasskoeffizient für den unteren Bereich ist 150 W · m-² · K⁻¹_{.}

Gemäß der Erfindung ist unter dem Gesamtwärmedurchlasskoeffizienten für den oberen Bereich der Wärmedurchlasskoeffizient zu verstehen, der sich ab Kollektorinnenwandung bis zum Isolierungsende in Richtung Erdoberfläche ergibt, also durch mehrere Schichten einschließlich eventueller Erdschicht. Für den unteren Bereich ist unter dem Gesamtwärmedurchlasskoeffizienten der Koeffizient ab Kollektorinnenwand bis Kollektoraußenwand in Richtung Erdinneres zu verstehen.

Zur weiteren Steigerung der Wärmeentzugsleistung können die Kollektorelemente des erfindungsgemäßen Erdwärmetauschers im Inneren Leiteinrichtungen aufweisen, die den Strom des flüssigen oder gasförmigen Arbeitsmediums gezielt in Richtung des unteren Bereichs führen und gleichzeitig zur Stabilität der Kollektorelemente beitragen. Um das Arbeitsmedium abschnittsweise in Richtung des unteren Bereichs zu führen, werden die Leiteinrichtungen je nach Dimensionierung in kleineren oder größeren Abständen eingebaut. Dadurch kann das Strömungsverhalten in den jeweiligen Abschnitten des Kollektorelementes variiert werden.

Bei der Montage des erfindungsgemäßen Erdwärmetauschers sollten die Kollektorelemente als zwei etwa gleich lange Stränge aufgebaut werden, die übereinanderliegend, seitlich versetzt sind. Das Arbeitsmedium sollte in diesen Strängen gegenfließend geführt werden. Vorzugsweise sind die Stränge aus mehreren Kollektorelementen zusammengesetzt.

Das Arbeitsmedium des erfindungsgemäßen Wärmetauschers kann beispielsweise Luft sein. Für diese Anlagen ist eine Arbeitszahl, das Verhältnis der abgegebenen Energiemenge zur aufgenommenen elektrischen Energie, größer als 30 möglich, wodurch erhebliche Energieeinsparungen erzielbar sind.

Ebenso können Kollektoren mit größerem Querschnitt effektiv eingesetzt werden, was wesentlich größere Medienströme ermöglicht.

Daraus folgt, dass Anlagen mit dem Trägermedium Luft als äußerst kostengünstige direkt wirkende Lüftungsanlage oder Kühlanlage im privaten sowie gewerblichen Bereich, als Vorstufe zur Verbesserung der Effektivität für die Wohnungslüftung mit Wärmerückgewinnung, Luft/Wasser-Wärmepumpen mit oder ohne zeitweiser Nutzung als Kühlanlage oder Erdwärme-Aufwindkraftwerke einsetzbar sind. Durch die Nutzung eines beschränkten Erdreichvolumens ergibt sich überdies eine günstige Voraussetzung zur Abrufung in diesem Bereich von zuvor gespeicherter Energie, welche etwa zeitweise überschüssig bei der Betreibung von Solaranlagen anfällt.

Des Weiteren ergeben sich mit den erfindungsgemäßen Wärmetauschern geringere Erschließungskosten, da ein Grabenaushub nur bis zu einer Länge von ca. 16 m bei einer Breite von ca. 0,8 m in 2 m Tiefe für mit dem Medium Luft zu betreibende Anlagen bis 1000 m³/h erforderlich ist.

Das Arbeitsmedium des erfindungsgemäßen Wärmetauschers kann natürlich auch Wasser, vorzugsweise eine Sole, sein.

Die Kollektoren können erfindungsgemäß mit größeren Querschnitten eingesetzt werden, was wesentlich größere Medienströme ermöglicht. Daraus folgt, dass sich bei diesen Anlagen mit einer Flüssigkeit als Trägermedium die erforderliche Verlegefläche bis auf 1/3 verringert. Gegeben ist damit ein kostengünstiger Einbau und eine Belegung einer kleinen Verlegefläche.

Nach Maßgabe der Erfindung ist ferner die Verwendung eines erfindungsgemäßen Erdwärmetauschers in einer Erdwärmeheizung und/oder zur Anbindung an eine Sole/Wasser-Wärmepumpe vorgesehen. Des Weiteren ist die Verwendung des erfindungsgemäßen Wärmetauschers zur Kühlung bzw. Klimatisierung von technologischen Vorgängen oder Gebäuden vorgesehen.

Die Erfindung wird nachstehend anhand von Ausführungsbeispielen, die die Erfindung nicht einschränken sollen, unter Bezugnahme auf die Zeichnungen näher erläutert. Dabei zeigen:
- Fig. 1: eine Querschnittsdarstellung einer ersten Ausführungsform eines Kollektorelementes des erfindungsgemäßen Wärmetauschers mit gasförmigem Arbeitsmedium in rechteckiger Form;
- Fig. 2: eine Querschnittsdarstellung einer zweiten Ausführungsform eines Kollektorelementes des erfindungsgemäßen Wärmetauschers mit gasförmigem Arbeitsmedium in runder Form mit zwei übereinanderliegenden, seitlich versetzten Strängen;
- Fig. 3: eine Querschnittsdarstellung einer weiteren Ausführungsform eines Kollektorelementes des erfindungsgemäßen Wärmetauschers mit gasförmigem Arbeitsmedium in runder Form mit zwei übereinanderliegenden, seitlich versetzten Strängen und zusätzlichen isolierenden Platten am oberen Strang;
- Fig. 4: eine Ansicht von der Seite eines erfindungsgemäßen Wärmetauschers mit gasförmigem Arbeitsmedium in einer Erdwärmeheizung;
- Fig. 5: eine Ansicht von der Seite eines erfindungsgemäßen Wärmetauschers mit gasförmigem Arbeitsmedium zur Klimatisierung eines Gebäudes;
- Fig. 6: eine Querschnittsdarstellung von runden Kollektorelementen (1) des erfindungsgemäßen Wärmetauschers mit flüssigem Arbeitsmedium in einer Ausführungsform als übereinanderliegend, seitlich versetzten Vorlaufstrang (10), einschließlich Rücklaufstrang (11);
- Fig. 7: eine Querschnittsdarstellung von runden Kollektorelementen (1) des erfindungsgemäßen Wärmetauschers mit flüssigem Arbeitsmedium in einer weiteren Ausführung als übereinanderliegend, seitlich versetzten Vorlaufstrang (10) mit über diesem liegenden, einen niedrigen Wärmedurchlasskoeffizienten aufweisenden Plattenbelag, sowie den darunterliegenden Rücklaufstrang (11) und
- Fig. 8: eine Seitenansicht eines erfindungsgemäßen Wärmetauschers mit flüssigem Arbeitsmedium in Verbindung mit einer Sole/Wasser-Wärmepumpe.

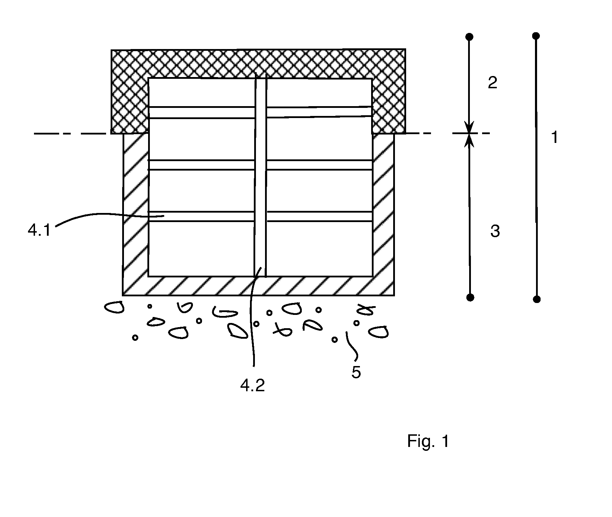

In der in Figur 1 gezeigten Querschnittsdarstellung einer Ausführungsform eines Kollektorelementes des erfindungsgemäßen Wärmetauschers weist das Kollektorelement (1) einen rechteckigen Querschnitt auf. In dieser Ausführungsform hatte der der Oberfläche des Erdreichs zugewandte obere Bereich (2) einen Gesamtwärmedurchlasskoeffizienten von 1 W · m⁻² · K⁻¹ und der dem Erdinneren zugewandte untere Bereich (3) einen Gesamtwärmedurchlasskoeffizienten von 150 W · m⁻² · K⁻¹. Im Inneren des Kollektorelementes sind eingefügte Leiteinrichtungen (4) zu erkennen, die den Strom des Arbeitsmediums in Richtung des unteren Bereichs führen und zur Stabilität des Elementes beitragen. Die Leitschienen (4.1) sind in Strömungsrichtung leicht nach unten geneigt installiert und bestehen, ebenso wie die Stützen (4.2), aus Kunststoff, Edelstahl, Aluminium oder keramischem Material. Die Stützenform ist strömungsgerecht rund oder oval ausgeführt. Unterhalb der Bodenplatte ist der Belag (5) dargestellt.

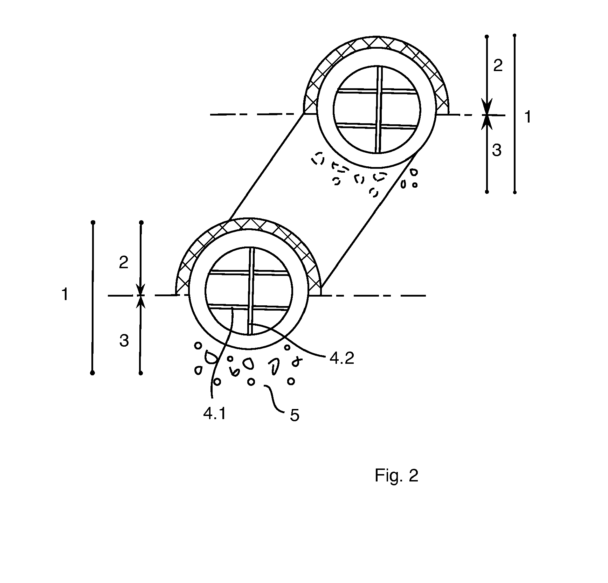

In der in Figur 2 gezeigten Querschnittsdarstellung einer Ausführungsform der Kollektorelemente des erfindungsgemäßen Wärmetauschers weisen die Kollektorelemente (1) einen runden Querschnitt auf. Im Inneren der Kollektorelemente sind ebenfalls Leiteinrichtungen (4) zu erkennen. Ein runder Querschnitt wirkt sich ebenso wie ein Querschnitt in Eiform günstig hinsichtlich Verdichtung im Bodenbereich und Stabilität aus.

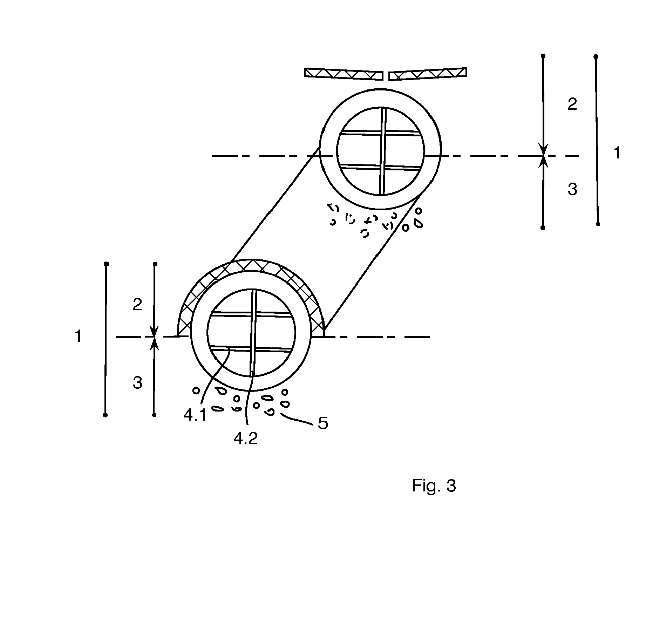

In Figur 3 ist eine Querschnittsdarstellung einer weiteren Ausführungsform der Kollektorelemente des erfindungsgemäßen Wärmetauschers zu erkennen, bei der die Kollektorelemente (1) einen runden Querschnitt aufweisen. Zusätzlich sind im oberen Bereich (2) des Kollektorelements (1) im oberen Strang feuchtigkeitsundurchlässige Hartschaumplatten vorgesehen. Ab welcher Wegstrecke eine Isolierung direkt am Kanal in Richtung Erdoberfläche sinnvoll erscheint, ist von vielen Faktoren, wie Erdfeuchte, abhängig. Die Isolierung wird durchgängig für den oberen Kanal über einen mit Erdreich angefüllten Zwischenraum verlegt. Die Isolierung schirmt dabei gleichzeitig gegen unerwünschte Temperatureinwirkungen von der Erdoberfläche zum Kanal etwas ab. Ausgeführt werden kann diese Isolierung mit folienbezogenen Hartschaumplatten, welche geneigt zur Kanalmitte verlegt werden, wobei die Stoßkante Wasser von der Erdoberfläche durchleiten sollte. Eine Ausführung ohne einen mit Erdreich angefüllten Zwischenraum ist ebenfalls möglich. Im Inneren des Kollektorelementes sind ebenfalls Leiteinrichtungen (4) zu erkennen.

Ein bereits effizienter Betrieb ergab sich mit einer Versuchsanlage mit folgendem Aufbau:

In Erdreich mit geringem Feuchteanteil wurde ein erfindungsgemäßer Wärmetauscher in einer Grabenlänge von 14 m, der untere Abschnitt in einer Tiefe von 2 m und, nach Verfüllung, der obere Abschnitt in einer Tiefe von 1 m installiert. Die dem Erdinneren zugewandten unteren Bereiche (3) der Kollektorelemente bestanden aus zusammengesetzten Granitplatten; die oberen Bereiche (2) aus Granitplatten mit Hartschaumbelag.

Im Betrieb ergab sich im Winter bei Außenlufttemperaturen bis -10 °C eine Erwärmung der Lufttemperatur auf + 3°C und im Sommer bei Außenlufttemperaturen bis + 35 °C eine Abkühlung der Lufttemperatur auf + 22 °C.
Mit einem Volumenstrom von 750 m³/h und einer Lüfterleistung von 100 W ergibt dies einen Wärmegewinn von
Q = 750 * 0,3 * 13 = 3400 W und eine
Arbeitszahl e = 3400/100 = 41.

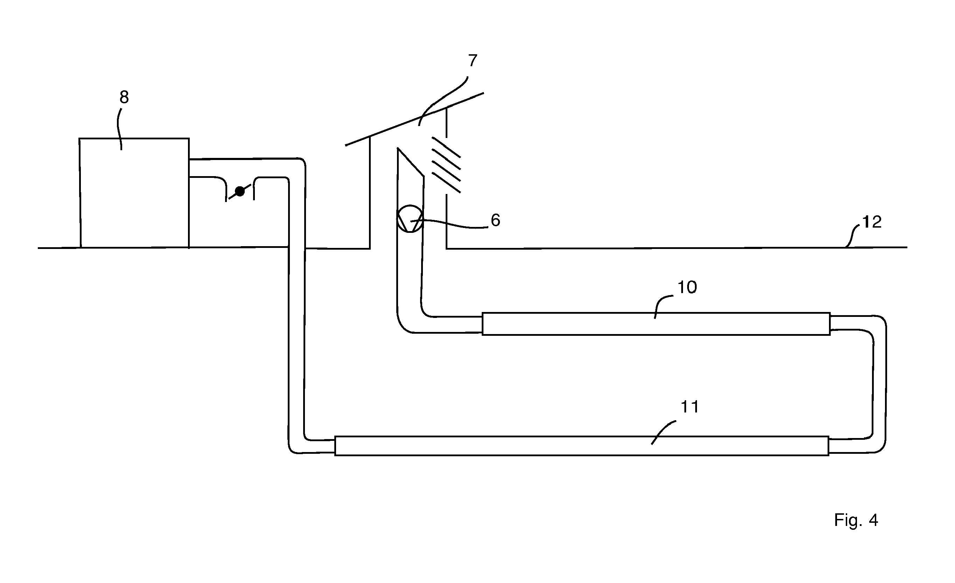

In Figur 4 ist die Ankopplung einer Wärmetauschereinheit an eine Luft/Wasser-Wärmepumpe (8) mit Außenluftfilter (7) und Lüfter (6) mit günstiger druckseitiger Durchströmung dargestellt.

Sie zeigt die Umstellmöglichkeit einer Fahrweise auch ohne Erdwärmetauscheranschluss für Jahresübergangszeiten. Möglich ist auch eine zeitweise Nutzung im Winter oder eine durchgängige Nutzung im Sommer als Klimaanlage.

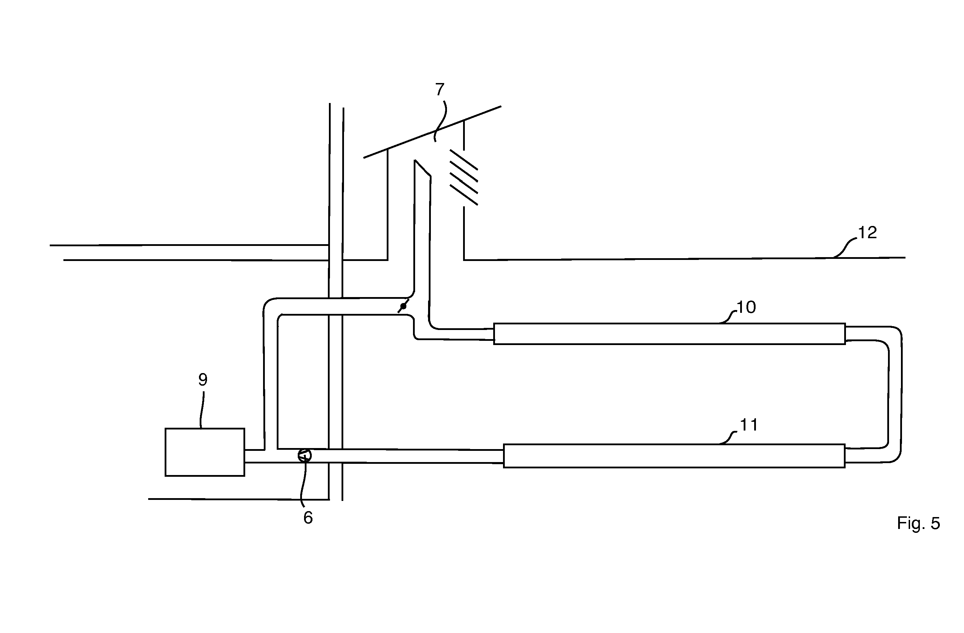

Ein ähnlicher Aufbau für die Ankopplung einer Wärmetauschereinheit an eine Wärmerückgewinnungsanlage (9) ist der Figur 5 entnehmbar.

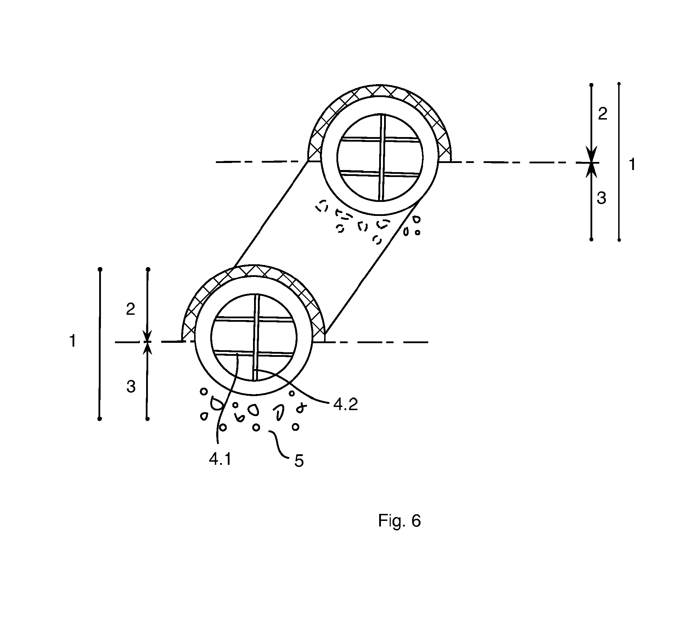

In der in Figur 6 gezeigten Querschnittsdarstellung einer Ausführungsform sind im Inneren der Kollektorelemente (1) eingefügte Leiteinrichtungen (4) zu erkennen, die den Strom des Arbeitsmediums in Richtung des unteren Bereiches (3) führen und des Weiteren zur Stabilität der Elemente beitragen. Die Leitschienen (4.1) sind in Strömungsrichtung leicht nach unten geneigt installiert und bestehen, ebenso wie die Stützen (4.2), aus Kunststoff, Edelstahl, Aluminium oder keramischem Material. Die Stützenform ist strömungsgerecht rund oder oval angelegt. Unterhalb der unteren Bereiche (3) ist der Belag (5) dargestellt. Ein runder Querschnitt der Elemente wirkt sich, ebenso wie ein Querschnitt in Eiform, hinsichtlich Stabilität und Verdichtung im Bodenbereich günstig aus.

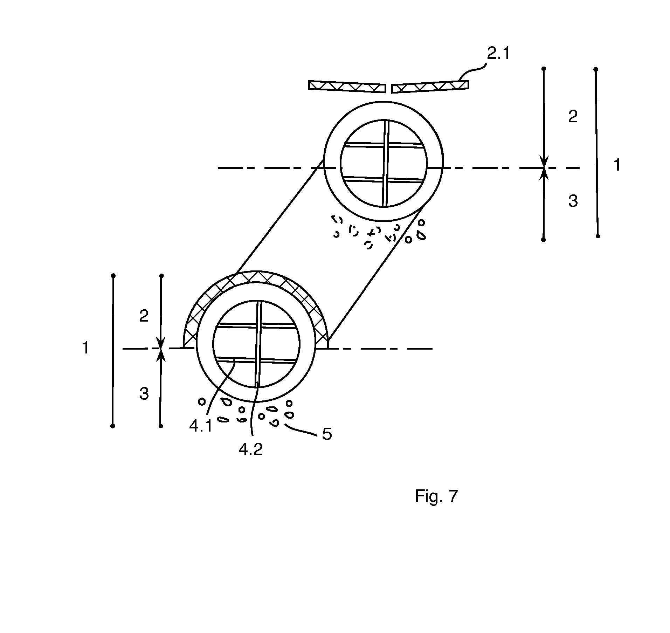

In Figur 7 ist eine Querschnittsdarstellung einer weiteren Ausführungsform des erfindungsgemäßen Wärmetauschers zu erkennen, bei der die Kollektorelemente (1) einen runden Querschnitt aufweisen. Hier sind im oberen Bereich (2) des oberen Vorlaufstranges (10) feuchtigkeitsundurchlässige Hartschaumplatten vorgesehen. Ab welcher Wegstrecke eine Isolierung direkt am Strang in Richtung Erdoberfläche sinnvoll erscheint, ist von vielen Faktoren, wie Erdfeuchte, abhängig. Die Isolierung ist hier durchgängig für den oberen Strang (10) über einen mit Erdreich angefüllten Zwischenraum verlegt. Eine Ausführung ohne einen mit Erdreich angefüllten Zwischenraum ist ebenfalls möglich. Im Inneren der Kollektorelemente (1) sind wiederum die Leiteinrichtungen (4) zu erkennen.

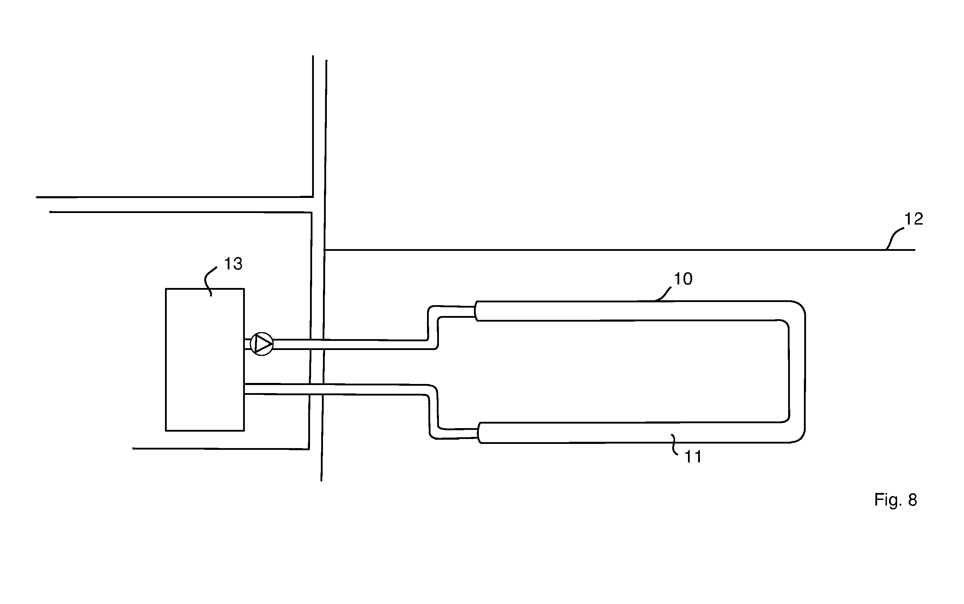

In Figur 8 ist die Ankopplung einer Wärmetauschereinheit an eine Sole/Wasser-Wärmepumpe (13) mit oberem Strang (10) und unterem Strang (11), welche bei weiteren parallel verlegten Einheiten über Verteiler und Sammler ein System bilden, dargestellt.

### Bezugszeichenliste

- 1: Kollektorelement
- 2: oberer Bereich des Kollektorelementes
- 3: unterer Bereich des Kollektorelementes
- 4: Leiteinrichtungen
- 4.1: Leitschiene
- 4.2: Stütze
- 5: Belag
- 6: Lüfter
- 7: Außenluftfilter
- 8: Luft/Wasser-Wärmepumpe
- 9: Wärmerückgewinnungsanlage
- 10: oberer Strang/Vorlauf
- 11: unterer Strang/Rücklauf
- 12: Geländeoberkante
- 13: Sole/Wasser-Wärmepumpe

## Patentansprüche

1. Erdwärmetauscher zum im Wesentlichen horizontalen Einbau in das Erdreich, umfassend ein oder mehrere Kollektorelemente (1) mit beliebiger Querschnittsgeometrie, die von einem flüssigen oder gasförmigen Arbeitsmedium durchströmt werden und dabei Wärme zwischen dem Arbeitsmedium und dem Erdreich übertragen,
**dadurch gekennzeichnet, dass** die Kollektorelemente (1) einen der Erdoberfläche zugewandten oberen Bereich (2) und einen mit diesem körperlich verbundenen, dem Erdinneren zugewandten unteren Bereich (3) aufweisen, wobei der Gesamtwärmedurchlasskoeffizient des oberen Bereichs (2) geringer ist als der Gesamtwärmedurchlasskoeffizient des unteren Bereichs (3).

2. Erdwärmetauscher nach Anspruch 1, **dadurch gekennzeichnet, dass** die Kollektorelemente im Inneren Leiteinrichtungen (4) aufweisen, die den Strom des Arbeitsmediums abschnittsweise gezielt in Richtung des unteren Bereichs (3) führen.

3. Erdwärmetauscher nach Anspruch 1 oder Anspruch 2, **dadurch gekennzeichnet, dass** zwei Kollektorelemente (1) als etwa gleich lange, gegenfließend, lotrecht oder seitlich versetzt, übereinanderliegende Stränge angeordnet sind.

4. Erdwärmetauscher nach Anspruch 3, **dadurch gekennzeichnet, dass** die Stränge aus mehreren Kollektorelementen (1) zusammengesetzt sind.

5. Erdwärmetauscher nach einem der vorstehenden Ansprüche, **dadurch gekennzeichnet, dass** das Arbeitsmedium eine Sole ist.

6. Erdwärmetauscher nach einem der Ansprüche 1 bis 4, **dadurch gekennzeichnet, dass** das Arbeitsmedium Luft ist.

7. Erdwärmetauscher nach Anspruch 5, **dadurch gekennzeichnet, dass** der Gesamtwärmedurchlasskoeffizient des unteren Bereichs (3) größer 40 W · m⁻² · K⁻¹, bevorzugt größer 150 W · m⁻² · K⁻¹, besonders bevorzugt größer 1000 W · m⁻² · K⁻¹ ist.

8. Erdwärmetauscher nach Anspruch 6, **dadurch gekennzeichnet, dass** der Gesamtwärmedurchlasskoeffizient des unteren Bereichs (3) größer 40 W · m⁻² · K⁻¹, bevorzugt größer 150 W · m⁻² · K⁻¹ ist.

9. Erdwärmetauscher nach Anspruch 5, **dadurch gekennzeichnet, dass** der untere Bereich (3) aus Gusseisen, Stahl, Kupfer, Aluminium, Kunststoff oder Kombinationen dieser Materialien besteht.

10. Erdwärmetauscher nach Anspruch 6, **dadurch gekennzeichnet, dass** der untere Bereich (3) aus magmatischen Gesteinsplatten, einem Gemisch aus magmatischem Gesteinssplitt mit Bindemittel, Gusseisen, Kunststoff, Steinzeug oder Kombinationen dieser Materialien besteht.

11. Erdwärmetauscher nach einem der vorstehenden Ansprüche, **dadurch gekennzeichnet, dass** der Gesamtwärmedurchlasskoeffizient des oberen Bereichs (2) kleiner als 20 W · m⁻² · K⁻¹, bevorzugt kleiner als 1 W · m⁻² · K⁻¹ ist.

12. Erdwärmetauscher nach einem der vorstehenden Ansprüche, **dadurch gekennzeichnet, dass** der obere Bereich (2) aus Beton, Blähton oder Hartschaum, gegebenenfalls mit feuchtigkeitsundurchlässiger Schutzschicht, in Kombination mit Beton und/oder mit den für den unteren Bereich (3) angegebenen Materialien besteht.

13. Erdwärmetauscher nach einem der vorstehenden Ansprüche, **dadurch gekennzeichnet, dass** der untere Bereich der Kollektorelemente (1) auf einem Belag (5) aus einem Gemisch von magmatischem Gesteinsschotter und einem Füllstoff aus Ton- und/oder Ziegelmehl aufgesetzt ist.

14. Verwendung eines Erdwärmetauschers nach einem der vorstehenden Ansprüche in einer Erdwärmeheizung und/oder zur Anbindung an eine Sole/Wasser-Wärmepumpe.

15. Verwendung eines Erdwärmetauschers nach einem der vorstehenden Ansprüche zur Kühlung bzw. Klimatisierung von technologischen Vorgängen oder Gebäuden.
